# EUROPEAN PATENT APPLICATION

(11) **EP 4 779 299 A1**
(43) Date of publication of application: **22.07.2026**
(21) Application number: 24864678.8
(22) Date of filing: 12.09.2024
(51) Int. Cl.: G01N 27/327, G01N 27/48

(54) **MEASUREMENT METHOD FOR BIOSENSOR, AND ANALYSIS SYSTEM**

(30) Priority: 14.09.2023 CN 202311186990; 28.09.2023 CN 202311266667
(71) Applicant: Leadway (HK) Limited, Sheung Wan, Hong Kong (CN)
(72) Inventor: SHI, Jinliang, Hangzhou, Zhejiang 310030 (CN); HUANG, Yonggang, Hangzhou, Zhejiang 310030 (CN); MAO, Qiuqu, Hangzhou, Zhejiang 310030 (CN); ZHANG, Li, Hangzhou, Zhejiang 310030 (CN); SUN, Yulong, Hangzhou, Zhejiang 310030 (CN); CHENG, Yan, Hangzhou, Zhejiang 310030 (CN); SONG, Xu, Hangzhou, Zhejiang 310030 (CN)
(74) Representative: Schiweck Weinzierl Koch Patentanwälte Partnerschaft mbB
(86) International application number: PCT/CN2024/118393
(87) International publication number: WO 2025/055964

(57) **Abstract**

Provided in the present invention are a measurement method and measurement system for testing a biological sample by using a biosensor. A measurement process includes: adding a sample into the biosensor; applying voltages to a working electrode and a counter electrode in stages, so as to generate different voltage differences; and on the basis of obtained electrical data, calculating a content of an analyte in the sample. The present invention significantly increases the resolution of a measured current signal, thereby improving the detection accuracy and precision of the measurement.

## Description

### TECHNICAL FIELD

The present invention pertains to the field of electrochemical detection of biological samples, and more specifically relates to a measurement method and an analysis system.

### BACKGROUND

A basic structure of a biosensor includes an insulating substrate, an electrode system disposed on the insulating substrate, and a reaction reagent is disposed on the electrode system, where the electrode system includes a working electrode and a counter electrode. The working electrode and the counter electrode are respectively connected to pins of an analyzer via electrode leads. Sample channels are disposed on the electrodes, and samples to be tested (e.g., a physiological fluid) pass through the sample channels to contact the reaction reagent, whereby an analyte to be tested in the samples reacts with the reaction reagent to generate an electrical signal. The analyzer provides a test result on the basis of the generated electrical signal.

An electrochemical method is a common method used to measure the concentration of the analyte in the physiological fluid (such as blood or plasma byproducts) using the biosensor. Components of the analyte are allowed to react with specific reagents to generate a substance that is oxidizable (or reducible) in proportion to the analyte concentration, ultimately converting the analyte concentration into an electrical signal, such as a current signal or impedance signal, which can be easily measured by the instrument, and the concentration of the analyte to be tested correlated with the magnitude of the signal. For example, in electrochemical measurement of creatinine, the creatinine concentration is converted into a current signal value correlated with the creatinine concentration under the action of enzymes such as creatininase, creatinase, sarcosine oxidase, and peroxidase.

Improving the measurement resolution of the analyte to be tested is an important factor to be considered in the design of biosensors and measurement systems of the analyzer. For example, the resolution of the current signal affects the detection accuracy; therefore, how to improve the current signal resolution of the biosensor is an important research topic in the field of biosensors.

Methods for improving the electrical signal resolution of the biosensor is to adjust a reagent formulation in the biosensor. Once the reagent formulation of the biosensor is determined, in order to further change the magnitude of the current to improve the resolution of the electrical signal, the commonly adopted approach is to alter the electrode structure of the sensor or enlarge the sample channel to enlarge the reaction area between the sample and the reagent. These approaches require redesign of the biosensor, which inevitably increases the design cost and prolongs the product development cycle.

### SUMMARY

To solve the above problems, the present invention provides a novel measurement method and measurement system applied to an electrochemical biosensor, which can improve the current signal resolution in electrochemical measurement, thereby enhancing the detection accuracy of the electrochemical biosensor.

Specifically, the present invention provides a measurement method for detection by adopting an electrochemical biosensor, wherein the electrochemical biosensor includes a working electrode and a counter electrode, and a measurement method includes:
Step 1: Adding a sample into the biosensor;
Step 2: Performing signal incubation for a duration of T1 s;
Step 3: After T1 s elapses, applying a voltage between the working electrode and the counter electrode of the biosensor for a duration of T2 s; and
Step 4: Based on electrical data obtained in Step 3, calculating a content of an analyte in the sample.

Further, in Step 2, the voltage is applied between the working electrode and the counter electrode of the biosensor, such that a voltage difference between the working electrode and the counter electrode is a positive voltage, zero voltage, or a negative voltage.

Further, in Step 3, the voltage is applied between the working electrode and the counter electrode of the biosensor such that generate a voltage difference between the working electrode and the counter electrode, wherein the voltage difference generated in Step 3 is opposite to the voltage difference generated in Step 2.

The voltage difference generated in Step 3 is opposite to the voltage difference generated in Step 2, meaning that when the voltage difference generated between the working electrode and the counter electrode in Step 2 is the positive voltage, the voltage difference generated between the working electrode and the counter electrode in Step 3 is the negative voltage.

Further, in Step 4, based on a measurement value at time T2, the content of the analyte in the sample is calculated.

Further, Step 1 further includes determining whether a sample volume is sufficient. After the sample is added into the biosensor, the voltage is applied to the working electrode and the counter electrode, such that the voltage difference between the working electrode and the counter electrode is the positive voltage. When a change in current is detected, it is determined that the sample volume meets the requirement and is sufficient, and the process proceeds to Step 2.

The analyte is selected from creatinine, blood glucose, uric acid, cholesterol, or triglyceride.

More specifically, the present invention provides a method for measuring creatinine for detection by adopting an electrochemical biosensor, wherein the electrochemical biosensor includes a working electrode and a counter electrode, and a measurement process includes:
Step 1: Adding a sample into the biosensor;
Step 2: Applying a voltage to the working electrode and the counter electrode of the biosensor, such that a voltage difference between the working electrode and the counter electrode is a positive voltage, or no voltage is applied, for a duration of T1 s;
Step 3: After T1 s elapses, applying a voltage between the working electrode and the counter electrode of the biosensor, such that the voltage difference between the working electrode and the counter electrode is a negative voltage for a duration of T2 s; and
Step 4: Best on electrical data obtained in Step 3, calculating a content of an analyte in the sample.

Further, in Step 2 of the method for measuring creatinine, the voltage is applied to the working electrode and the counter electrode of the biosensor, such that the voltage of the working electrode is 0.4V higher than the voltage of the counter electrode.

More specifically, in Step 2 of the method for measuring creatinine, the voltage applied to the working electrode is 0.4V and the voltage applied to the counter electrode is 0V.

Further, in Step 3 of the method for measuring creatinine, the voltage is applied to the working electrode and the counter electrode of the biosensor, such that the voltage of the working electrode is 0.4V lower than the voltage of the counter electrode.

More specifically, in Step 3 of the method for measuring creatinine, the voltage applied to the working electrode is 0.4V and the voltage applied to the counter electrode is 0.8V.

Further, in Step 4 of the method for measuring creatinine, based on a measurement value at time T2, the content of the analyte in the sample is calculated.

Further, the method for measuring creatinine further includes a step of determining whether the sample has been introduced. Specifically, in Step 1 of the method for measuring creatinine, the voltage is applied to the working electrode and the counter electrode of the biosensor, such that the voltage difference between the working electrode and the counter electrode is a positive voltage. Specifically, when a change in current is detected, it indicates that the sample has entered a reaction zone of the biosensor. Subsequently, the method enters Step 2, and the analyzer initiates T1 timing.

Further, in the sample introduction determination step of the method for measuring creatinine, the voltage applied to the working electrode is 0.4V and the voltage applied to the counter electrode is 0V.

Further, in the method for measuring creatinine, T1 is longer than or equal to 30 s, and T2 is longer than or equal to 3 s.

Further, the biosensor for creatinine detection includes a test reagent, including creatininase, creatinase, sarcosine oxidase, peroxidase, and a reduced electron mediator.

A signal incubation step is added between the conventional sample addition step and the signal measurement and calculation steps in the present invention, such that after the sample addition step, after waiting for a certain period of time (T1s), the method proceeds to the steps of conventional signal measurement and result calculation. The signal incubation may be performed by not applying a voltage between the working electrode and the counter electrode, or after the voltage is applied, the voltage difference between the working electrode and the counter electrode is zero; alternatively, the signal incubation may be performed by applying a voltage to the working electrode and the counter electrode, such that the voltage difference generated on the working electrode and the counter electrode is opposite to the voltage difference in the signal measurement phase.

The present invention provides a biological sample analysis system and an analyzer, where the analysis system includes a biosensor and the analyzer. The analyzer includes pins connected to electrode leads of the biosensor, where the pins are connected to a current-to-voltage conversion circuit, the current-to-voltage conversion circuit is connected to an analog-to-digital conversion circuit, the analog-to-digital conversion circuit is connected to a microcontroller, and the analyzer further includes a positive voltage generation circuit connected to the working electrode lead, and a voltage switching circuit connected to the counter electrode lead. During measurement, the analyzer applies a voltage to the working electrode and the counter electrode of the biosensor for a duration of T1 s, or does not apply a voltage for a duration of T1 s; after the time of T1 s elapses, a voltage is applied between the working electrode and the counter electrode of the biosensor, and the voltage difference generated by the applied voltage is opposite to the voltage difference generated during T1 s for a duration of T2 s; based on electrical data for the duration of T2 s, a content of an analyte in the sample is calculated.

Further, during T1 s, the voltage is applied between the working electrode and the counter electrode of the biosensor, such that the voltage difference between the working electrode and the counter electrode is a positive voltage or a negative voltage.

More specifically, the biological sample analysis system implements a creatinine content analysis. The analyzer is an analyzer for detecting the creatinine content, and the biosensor is for creatinine detection.

Further, during creatinine content measurement, a voltage is applied to the working electrode and the counter electrode of the biosensor, such that the voltage difference between the working electrode and the counter electrode is a positive voltage for a duration of T1 s, or no voltage is applied for a duration of T1 s; after T1 s elapses, a voltage is applied between the working electrode and the counter electrode of the biosensor, such that the voltage difference between the working electrode and the counter electrode is a negative voltage for a duration of T2 s; and based on electrical data during T2 s, a content of an analyte in the sample is calculated.

Further, during T1 s, a voltage is applied to the working electrode and the counter electrode of the biosensor, such that the voltage of the working electrode is 0.4V higher than the voltage of the counter electrode.

More specifically, the voltage applied to the working electrode is 0.4V and the voltage applied to the counter electrode is 0V.

Further, during T2 s, a voltage is applied to the working electrode and the counter electrode of the biosensor, such that the voltage of the working electrode is 0.4V lower than the voltage of the counter electrode.

More specifically, the voltage applied to the working electrode is 0.4V and the voltage applied to the counter electrode is 0.8V.

Further, in the calculation step, based on a measurement value at T2, the content of the analyte in the sample is calculated.

Further, T1 is longer than or equal to 30 s, and T2 is longer than or equal to 3 s.

Further, the reagent on the biosensor includes creatininase, creatinase, sarcosine oxidase, peroxidase, and a reduced electron mediator.

The signal incubation step is added in the measurement method of the present invention. By waiting for a certain period of time and combining with an increased voltage, the current signal resolution of electrochemical measurement is improved without changing a biosensor strip formulation or increasing a sample contact chamber (sample channel), thereby enhancing the measurement accuracy. In the present invention, the voltage is applied to the working electrode and the counter electrode in stages to generate different voltage differences. For example, the measurement method in which the voltage difference generated by applying the voltage between the working electrode and the counter electrode of the biosensor in the signal incubation phase is opposite to the voltage difference generated by applying the voltage between the working electrode and the counter electrode of the biosensor after incubation is adopted, which further improves the current signal resolution and measurement accuracy of electrochemical measurement. Applying the method of the present invention to electrochemical measurement of creatinine, blood glucose, uric acid, cholesterol, triglyceride, and other intermediates that generate H₂O₂ during reaction, enables high-resolution electrical signals and high detection accuracy, effectively reducing the development cost of the biosensor.

### BRIEF DESCRIPTION OF THE DRAWINGS

FIG. 1 is a schematic diagram of a test circuit of the present invention.
FIG. 2 is a waveform diagram of a voltage applied across a working electrode and a counter electrode.
FIG. 3 is a schematic diagram of a biosensor for creatinine detection, where electrodes are covered with an insulating layer but not with a gap layer and a cover layer.
FIG. 4 is an exploded schematic diagram of a biosensor for creatinine detection.
FIG. 5 is a sectional view of a biosensor for creatinine detection.
FIG. 6 is a measurement flow chart of the present invention.
FIG. 7 is a diagram showing a relationship between a creatinine concentration and a current signal magnitude under different incubation voltages and times.
FIG. 8 shows a relationship between a creatinine concentration and a current signal magnitude when an incubation voltage is the same but an incubation time is different.
FIG. 9 is a waveform diagram of a current signal varying with time during a signal test phase.

### DETAILED DESCRIPTION OF THE EMBODIMENTS

The present invention will be described in detail below in conjunction with specific embodiments.

### Embodiment 1 A biosensor for detecting a creatinine content and an analytical instrument

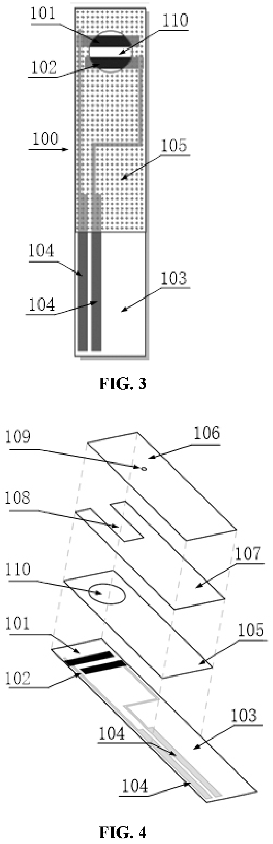

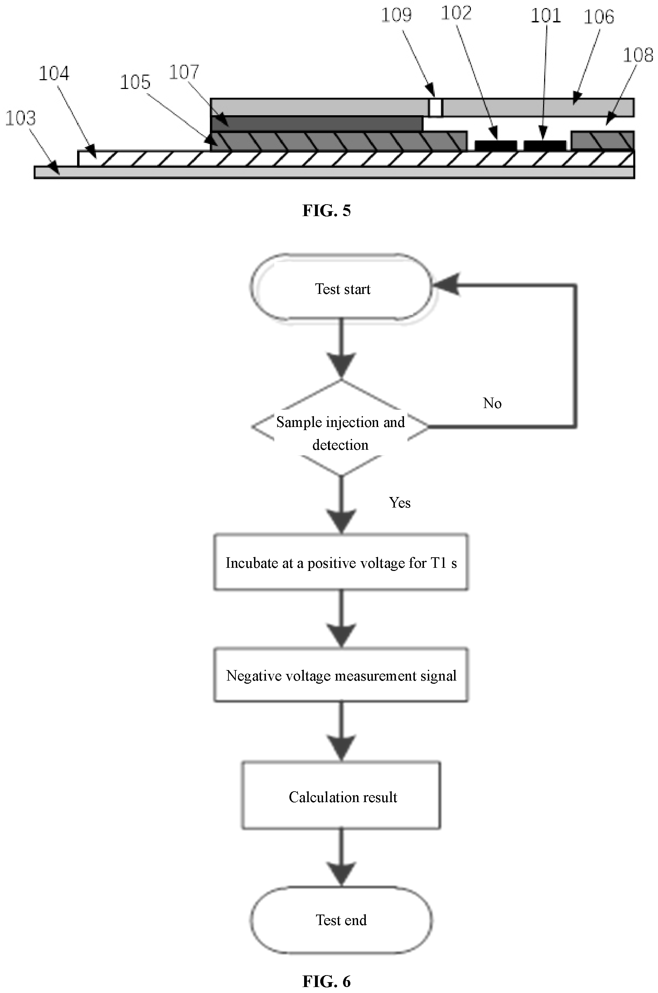

The biosensor 100 for detecting a creatinine content in a blood sample shown in FIGS. 3, 4, and 5 includes an insulating substrate 103, a working electrode 101 and a counter electrode 102 disposed on the insulating substrate 103, an electrode lead 104 connected to the working electrode or counter electrode, wherein the other end of the electrode lead is connected to the analyzer. The insulating layer 105, serving as a reaction area forming layer, covers the electrodes. An opening is formed at a position corresponding to the signal reaction area 110 of the electrode in the insulating layer, and a reaction reagent is added into the opening. A sample channel 108 is formed between the insulating layer 105 and the cover layer 106 via a gap layer 107, and a vent 109 is formed on the cover layer. FIG. 3 is a schematic diagram where electrodes of the biosensor are covered with the insulating layer but not with the gap layer and the cover layer, and the figure displays an electrode arrangement mode beneath the insulating layer. The signal reaction area 110 contains a reaction reagent, including creatininase, creatinase, sarcosine oxidase, peroxidase, an enzyme mediator, a surfactant, a buffer and the like.

The reaction principle for detecting creatinine with the biosensor is as follows: The biosensor 100 for detecting the creatinine content in the blood sample is inserted into the analyzer. When the blood sample enters the biosensor through the sample channel 108, creatinine in the blood sample generates sarcosine under the action of creatininase and creatinase in the biosensor (formula (1)); sarcosine, H₂O, and O₂ react under the action of sarcosine oxidase to generate formaldehyde, glycine, and H₂O₂ (formula (2)); the reduced electron mediator and H₂O₂ react under the action of peroxidase to produce oxidized electron mediator and H₂O (formula (3)); after a potential is applied by a measurement circuit, the oxidized electron mediator absorbs electrons to react to generate the reduced electron mediator (formula (4)). In formula (4), the number of electrons is positively correlated with the creatinine concentration, and the creatinine measurement analyzer can convert the detected current signal into a specific value of creatinine concentration through a fixed software system.

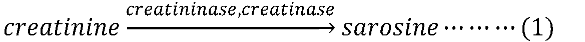

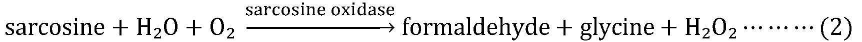

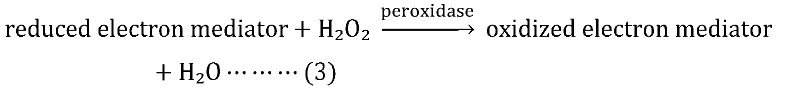

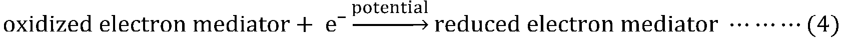

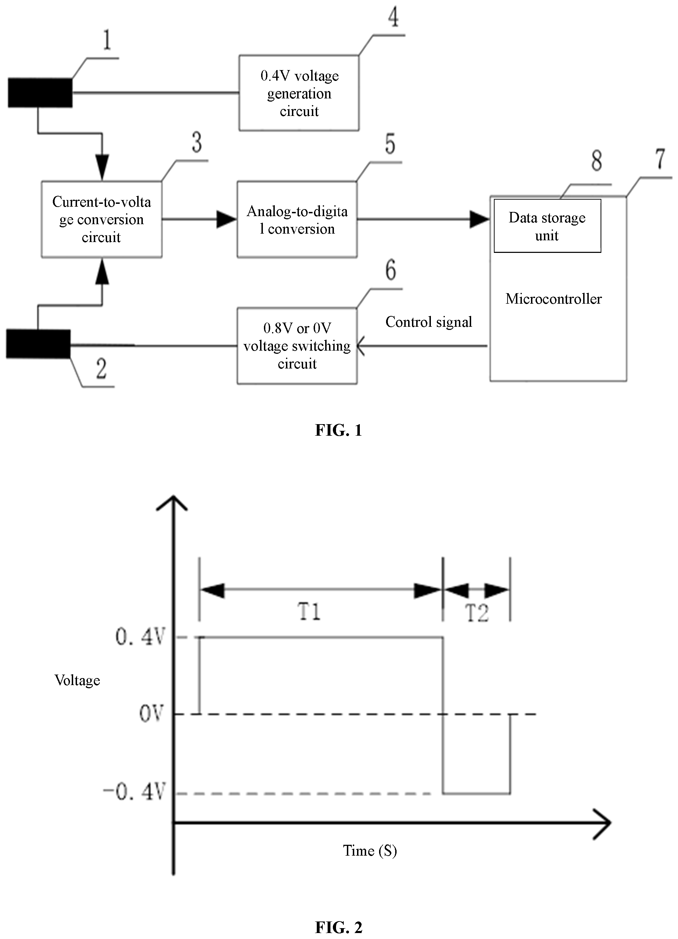

A test circuit of the creatinine measurement analyzer is shown in FIG. 1, including a metal spring sheet 1 connected to the working electrode 101 of the biosensor 100, and a metal spring sheet 2 connected to the counter electrode 102 of the biosensor. The metal spring sheet 1 and the metal spring sheet 2 are respectively connected to the current-to-voltage conversion circuit 3, which is composed of a transimpedance amplifier. The metal spring sheet may also be referred to as a pin. The current-to-voltage conversion circuit 3 is connected to the analog-to-digital conversion circuit 5, and the analog-to-digital conversion circuit 5 is connected to the microcontroller 7, which is based on a single-chip microcomputer as a core, for controlling the 0.8V or 0V voltage switching circuit 6 and acquiring the test signal from the analog-to-digital conversion circuit 5 and calculating the test result, and a data storage unit 8 is disposed in the microcontroller. The test circuit further includes a 0.4V voltage generation circuit 4 and a 0.8V or 0V voltage switching circuit 6. The 0.4V voltage generation circuit 4 is generated by dividing the voltage of a reference source and then outputting the divided voltage through an operational amplifier in a follower configuration. The 0.8V voltage in the 0.8V or 0V voltage switching circuit 6 is generated by dividing the voltage of a reference source and then outputting the divided voltage through an operational amplifier in a follower configuration, while 0V is directly connected to the system ground. Switching between the two is achieved by an analog switch.

A voltage value of the voltage generation circuit 4 and a voltage value of the voltage switching circuit 6 may be set according to actual requirements and are not necessarily 0.4V or 0.8V.

### Embodiment 2 A method for measuring a creatinine content in a blood sample

The method for measuring the creatinine content in the blood sample includes the following steps.

Step 1: Sample injection and detection: the biosensor is inserted into the analyzer, and the sample is added into the biosensor. The analyzer detects whether a sample has entered the reaction area of the biosensor to confirm successful sample injection. When the instrument detects sample injection, the instrument enters a signal incubation period.

Step 2: Signal incubation period: During the incubation period, a voltage is applied between the working electrode and the counter electrode of the biosensor, such that a voltage difference between the working electrode and the counter electrode is a positive voltage (i.e., the working electrode voltage is higher than the counter electrode voltage), for a duration of T1 s, and then the method proceeds to the signal measurement period.

Step 3: Signal measurement period: During the measurement period, a voltage is applied between the working electrode and the counter electrode of the biosensor, such that the voltage difference between the working electrode and the counter electrode is a negative voltage (i.e., the working electrode voltage is lower than the counter electrode voltage). At this time, a current signal is generated between the working electrode and the counter electrode, which is converted into a voltage signal by the current-to-voltage conversion circuit, and the signal is sampled and recorded by the analog-to-digital conversion circuit, for a duration of T2 s.

Step 4: Result calculation: A measurement value at time of T2 s of the measurement period is taken and converted to a creatinine concentration using a calibration curve.

The specific durations of the times T1 s and T2 s may be determined as needed based on experimental results, for example, as the optimal times selected after repeated laboratory testing of the biosensor.

As shown in FIGS. 1 to 6, the creatinine content in the blood sample is measured using the biosensor 100 and the test circuit of the analyzer in Embodiment 1.

During the sample injection and detection phase, the blood sample is added into the sample channel 108 of the biosensor, a voltage applied to the working electrode 101 by the test circuit of the analyzer is 0.4V and the voltage applied to the counter electrode 102 is 0V. At this time, the analog-to-digital conversion circuit 5 operates continuously. When the controller 7 detects a change in current via the analog-to-digital conversion circuit 5, it indicates that the sample has entered the reaction area 110, and the controller then starts T1 timing to enter the signal incubation phase.

During the signal incubation phase, upon detection of sample addition, the incubation program is initiated. In this embodiment, a positive voltage incubation method is used, that is, after applying the voltage, the voltage difference between the working electrode and the counter electrode is a positive pressure. Specifically, the voltage applied to the working electrode 101 is 0.4V and the voltage applied to the counter electrode 102 is 0V. At this time, the voltage of the working electrode is 0.4V relative to the voltage of the counter electrode, and the incubation voltage waveform is as shown in the T1 time period of FIG. 2, where T1 represents the application of a 0.4V incubation voltage between the working electrode and the counter electrode for a duration of T1 s. During this process, the analog-to-digital conversion circuit 5 does not need to operate. When the controller 7 times out at T1 s, the incubation ends and the signal measurement phase begins. In this embodiment, the current signal generated during the incubation phase does not participate in the result calculation. In other embodiments, the analog-to-digital conversion circuit 5 operates, but the current signal generated during the incubation phase does not participate in the result calculation.

During the signal measurement phase, after the signal incubation is completed, a signal measurement program is initiated. In this embodiment, a negative voltage measurement method is used, that is, after applying the voltage, the voltage difference between the working electrode and the counter electrode is a negative voltage. Specifically, the voltage is applied to the working electrode is 0.4V, and the voltage applied to the counter electrode is controlled by the controller, switched from 0V to 0.8V. At this time, the voltage of the working electrode is -0.4V relative to the voltage of the counter electrode, and the waveform is as shown in the T2 time period of FIG. 2, where T2 represents the application of a -0.4V measurement voltage between the working electrode and the counter electrode for a duration of T2 s. The controller 7 continuously acquires the voltage signal generated by the creatinine current signal, which flows through the current-to-voltage conversion circuit 3, via the analog-to-digital conversion circuit 5, and stores the voltage signal in a storage unit 8 of the controller 7. After the time of T2 s elapses, measurement is stopped. The method proceeds to the result calculation phase.

During the result calculation phase, the controller 7 analyzes the data acquired during the T2 s, takes the measurement value at the T2 s of the measurement period, and converts the same into the creatinine concentration using a calibration curve.

The voltage difference being the positive voltage or negative voltage is relative.

Taking the voltage of the counter electrode as a reference, if a voltage is applied to the working and counter electrodes of the biosensor, the voltage of the working electrode is higher than the voltage of the counter electrode, the voltage difference between the two is a positive voltage. For example, if the voltage applied to the working electrode is 0.4V and the voltage applied to the counter electrode is 0V, the voltage difference between the working electrode and counter electrode is 0.4V, that is, the voltage of the working electrode relative to the counter electrode is 0.4V. If a voltage is applied to the working electrode and the counter electrode of the biosensor, the voltage of the working electrode is lower than the voltage of the counter electrode, the voltage difference between the two is a negative voltage. For example, if the voltage applied to the working electrode is 0.4V and the voltage applied to the counter electrode is 0.8V, the voltage difference between the working electrode and the counter electrode is -0.4V, that is, the voltage of the working electrode relative to the counter electrode is -0.4V.

On the contrary, taking the voltage of the working electrode as a reference, if a voltage is applied to the working electrode and the counter electrode of the biosensor, the voltage of the working electrode is higher than the voltage of the counter electrode, the voltage difference between the two is a negative voltage. For example, if the voltage applied to the working electrode is 0.4V is and the voltage applied to the counter electrode is 0V, the voltage difference between the working electrode and the counter electrode is -0.4V, that is, the voltage of the working electrode relative to the counter electrode is -0.4V. If a voltage is applied to the working electrode and the counter electrode of the biosensor, the voltage of the working electrode is lower than the voltage of the counter electrode, the voltage difference between the two is a positive voltage. For example, if the voltage applied to the working electrode is 0.4V and the voltage applied to the counter electrode is 0.8V, the voltage difference between the working electrode and the counter electrode is 0.4V, that is, the voltage of the working electrode relative to the counter electrode is 0.4V.

Embodiment 3 A relationship between a creatinine concentration and a current signal magnitude under different incubation voltages and times

To compare the relationship between the creatinine concentration in the sample and the current signal under different incubation voltages and incubation times, this embodiment adopts three experimental schemes for comparative experiments.

### Experimental Group 1

In this experimental group, measurement steps include Step 1 sample injection and detection, Step 3 signal measurement, and Step 4 result calculation from Embodiment 2. This experimental group does not include signal incubation from Embodiment 2. Specifically, after completing sample injection and detection according to the method of Embodiment 2, the process directly enters the signal measurement phase. A voltage is applied to the working electrode and the counter electrode of the biosensor, such that the voltage of the working electrode relative to the voltage of the counter electrode is -0.4V, for a duration of T2 s, then the method proceeds to the result calculation phase, and the measurement value at the T2 s is used to calculate a creatinine concentration.

### Experimental Group 2

In this experimental group, measurement steps include Step 1 sample injection and detection, Step 2 signal incubation, Step 3 signal measurement, and Step 4 result calculation from Embodiment 2, except that the signal incubation is performed without applying a voltage. Specifically, after completing sample injection and detection according to the method of Embodiment 2, the process enters the signal incubation phase, during which incubation is performed without applying a voltage, for example, a voltage difference between the working electrode and the counter electrode is 0V. When the controller times T1 to 30 s (that is, 30 s of incubation without applying a voltage), the process enters signal measurement, a constant -0.4V voltage is applied to the working electrode and the counter electrode of the biosensor for a duration of T2 s, then the method proceeds to the result calculation phase, and a measurement value at the T2 s is used to calculate a creatinine concentration.

### Experimental Group 3

In this experimental group, measurement steps include Step 1 sample injection and detection, Step 2 signal incubation, Step 3 signal measurement, and Step 4 result calculation from Embodiment 2. Specifically, after completing sample injection and detection according to the method of Embodiment 2, the process enters the signal incubation phase. A voltage is applied to the working electrode and the counter electrode of the biosensor, such that the voltage of the working electrode relative to the voltage of the counter electrode is 0.4V. When the controller times T1 to 30 s, the process enters signal measurement. During the signal measurement phase, a constant -0.4V voltage is applied to the working electrode and the counter electrode of the biosensor for a duration of T2 s, then the method proceeds to the result calculation phase, and a measurement value at the T2 s is used to calculate a creatinine concentration.

The times T2 for all three experimental groups above are 3 s.

The signal measurement phase in this embodiment adopts the method of applying 0.4V to the working electrode and 0.8V to the counter electrode. Of course, in other embodiments, it is also possible to apply 0.5V to the working electrode and 0.9V to the counter electrode, as long as the voltage difference between the working electrode and the counter electrode is -0.4V. Likewise, the voltage applied during the incubation phase may be selected according to an actual product design, for example, 0.5V applied to the working electrode and 0.1V applied to the counter electrode during the incubation phase.

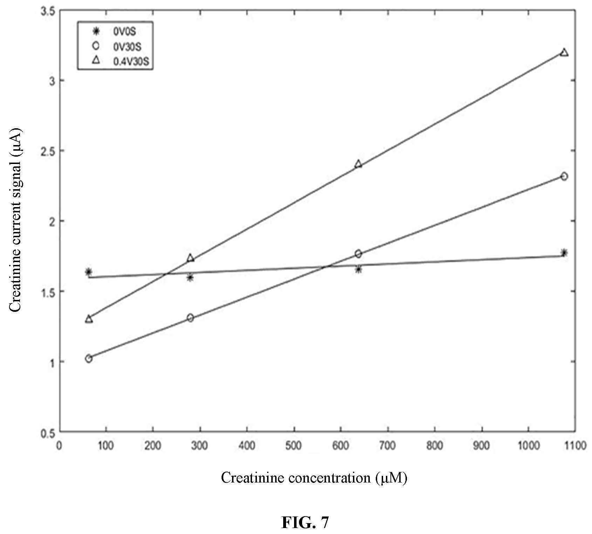

In this embodiment, a plurality of groups of samples with known creatinine concentrations are prepared from fresh blood. The specific creatinine concentrations in the embodiments are shown in Table 1, and the test results are shown in Table 1 and FIG. 7. FIG. 7 is a graph showing a relationship between a creatinine concentration and a current signal magnitude under different incubation voltages and times, where 0V0S represents no incubation, 0V30S represents 30 s of incubation without applying a voltage, and 0.4V30S represents an incubation phase by applying a 0.4V incubation voltage.

By using the experimental Group 1 (marked as 0V0S in FIG. 7), that is, after sample injection and detection, the method directly proceeds to the signal measurement phase with -0.4V applied. The test results show that a measurement slope of Experimental Group 1 is only 0.0002 µA/µM, with essentially no signal gradient.

By adopting Experimental Group 2 (marked as 0V30S in FIG. 7), that is, after sample injection and detection, incubation is performed without applying a voltage for 30 s, then -0.4V is applied for signal measurement. The test results show that a measurement slope of Experimental Group 2 is 0.0013 µA/µM, which is more than six times the slope of Experimental Group 1 measured without incubation, and the detection signal gradient is significantly increased.

By adopting Experimental Group 3 (marked as 0.4V30S in FIG. 7), that is, after sample injection and detection, incubation is performed by applying a voltage of 0.4V for 30 s, then -0.4V is applied for signal measurement. The test results show that a measurement slope of Experimental Group 3 is 0.0019 µA/µM, which is increased by more than 40% compared to that of Experimental Group 2, and the detection signal gradient is further increased.

Based on the above analysis, the addition of the incubation step during the creatinine measurement process can increase the detection signal gradient, especially after the addition of the voltage incubation step, which can significantly enhance the detection signal gradient. This may be due to the fact that the incubation process facilitates electron accumulation during the reaction, particularly voltage incubation (for example, applying a voltage of 0.4V for incubation for 30 s), which can greatly improve the gradient of the detection response current.

**Table 1**

| Biosensor batch number | RD190430A | | | | RD190430A | | | | RD190430A | | | |
|---|---|---|---|---|---|---|---|---|---|---|---|---|
| Set conditions | 0V0S | | | | 0V30S | | | | 0.4V30S | | | |
| Hematocrit(Hct) | 42% | | | | 42% | | | | 42% | | | |
| Creatinine concentration (uM) | 62.4 | 279.2 | 637.4 | 1076.2 | 62.4 | 279.2 | 637.4 | 1076.2 | 62.4 | 279.2 | 637.4 | 1076.2 |

| Current (uA) | | | | | | | | | | | | |
|---|---|---|---|---|---|---|---|---|---|---|---|---|
| Rep.1 | 1.67 | 1.64 | 1.74 | 1.73 | 0.94 | 1.29 | 1.74 | 2.32 | 1.32 | 1.61 | 2.38 | 3.19 |
| Rep.2 | 1.57 | 1.60 | 1.61 | 1.72 | 1.08 | 1.32 | 1.88 | 2.24 | 1.27 | 1.75 | 2.35 | 3.16 |
| Rep.3 | 1.59 | 1.57 | 1.62 | 1.82 | 1.02 | 1.29 | 1.79 | 2.28 | 1.28 | 1.79 | 2.47 | 3.19 |
| Rep.4 | 1.65 | 1.57 | 1.65 | 1.81 | 0.99 | 1.30 | 1.69 | 2.35 | 1.30 | 1.75 | 2.39 | 3.18 |
| Rep.5 | 1.70 | 1.61 | 1.66 | 1.79 | 1.08 | 1.36 | 1.73 | 2.39 | 1.31 | 1.76 | 2.40 | 3.23 |
| Average | 1.636 | 1.598 | 1.656 | 1.774 | 1.022 | 1.312 | 1.766 | 2.316 | 1.296 | 1.732 | 2.398 | 3.190 |
| SD | 0.05 | 0.03 | 0.05 | 0.05 | 0.06 | 0.03 | 0.07 | 0.06 | 0.02 | 0.07 | 0.04 | 0.03 |
| CV | 3.3% | 1.8% | 3.1% | 2.6% | 5.9% | 2.2% | 4.1% | 2.5% | 1.6% | 4.0% | 1.9% | 0.8% |

### Embodiment 4 An analysis of a relationship between a creatinine concentration and a response current using different incubation times

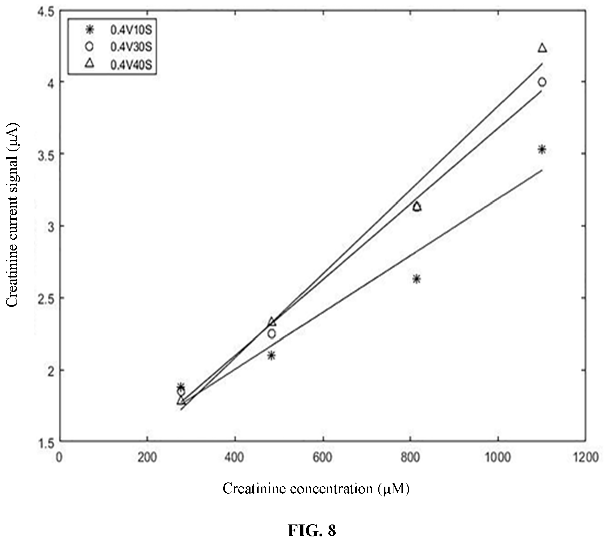

The method of this embodiment is substantially the same as Experimental Group 3 of Embodiment 3, except that the incubation times T1 are set to 10s, 30s, and 40s, respectively. The test results are shown in Table 2 and FIG. 8. FIG. 8 illustrates a relationship between a creatinine concentration and a current signal under different incubation times, where 0.4V10S represents incubation for 10 s by applying a 0.4V incubation voltage, 0.4V30S represents incubation for 30 s by applying a 0.4V incubation voltage, and 0.4V40S represents incubation for 40 s by applying a 0.4V incubation voltage. The current signal slopes corresponding to incubation times of 10s, 30s, and 40s are 0.002 uA/uM, 0.0026 uA/uM, and 0.0029 uA/uM, respectively. The current signal increases with the extension of incubation time. Considering test efficiency and signal detection gradient, T1 may be selected as 30 s.

**Table 2**

| Biosensor batch number | RD190430A | | | | RD190430A | | | | RD190430A | | | |
|---|---|---|---|---|---|---|---|---|---|---|---|---|
| Set conditions | 0.4V10s | | | | 0.4V30s | | | | 0.4V40s | | | |
| Hematocrit(Hct) | 42% | | | | 42% | | | | 42% | | | |
| Creatinine concentration (uM) | 277 | 484 | 815 | 1100 | 277 | 484 | 815 | 1100 | 277 | 484 | 815 | 1100 |

| Current (uA) | | | | | | | | | | | | |
|---|---|---|---|---|---|---|---|---|---|---|---|---|
| Rep.1 | 1.9 | 2.2 | 2.6 | 3.5 | 1.9 | 2.2 | 3.1 | 4.0 | 1.7 | 2.4 | 2.9 | 4.3 |
| Rep.2 | 1.8 | 2.1 | 2.7 | 3.5 | 1.8 | 2.3 | 3.1 | 4.1 | 1.9 | 2.3 | 3.2 | 4.2 |
| Rep.3 | 2.0 | 2.1 | 2.6 | 3.6 | 1.9 | 2.3 | 3.1 | 4.0 | 1.8 | 2.3 | 3.2 | 4.2 |
| Rep.4 | 1.8 | 2.0 | 2.6 | 3.5 | 1.8 | 2.2 | 3.2 | 3.9 | 1.7 | 2.3 | 3.2 | 4.2 |
| Average | 1.88 | 2.10 | 2.63 | 3.53 | 1.85 | 2.25 | 3.13 | 4.00 | 1.78 | 2.33 | 3.13 | 4.23 |
| SD | 0.10 | 0.08 | 0.05 | 0.05 | 0.06 | 0.06 | 0.05 | 0.08 | 0.10 | 0.05 | 0.15 | 0.05 |
| CV | 5.1% | 3.9% | 1.9% | 1.4% | 3.1% | 2.6% | 1.6% | 2.0% | 5.4% | 2.2% | 4.8% | 1.2% |

### Embodiment 5 An analysis of a waveform of a current signal variation over time during a measurement phase

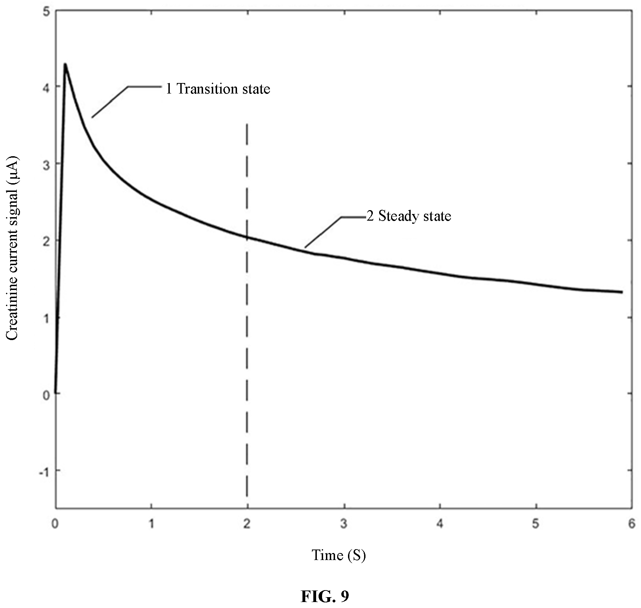

This embodiment adopts the method of Experimental Group 3 of Embodiment 3, with an incubation voltage of 0.4V and an incubation time T1 of 30 s. The creatinine concentration of the sample under test is 227 uM. During the 30s incubation period, the system does not measure the current value of the creatinine signal. Upon completion of incubation, the system enters the signal measurement phase, at which time the system monitors the creatinine current signal. The waveform of the electrical signal over time is shown in FIG. 9, that is, FIG. 9 is a waveform diagram of a current signal varying with time during a signal test phase. Specifically, during the testing period from 0 s to 2 s, the system is in a transition state, in which the current signal fluctuates sharply and exhibits high randomness. Therefore, test results are not suitable for selection within this time interval. When the signal measurement phase is after 2 s, the current signal is in a steady state, the signal changes slowly over time, and the signal is acquired stably. Therefore, the test results should be selected within this state. In this embodiment, the current signal value at 3 s (during T2) is selected as a test value for the creatinine signal.

### Embodiment 6 Stability Test

This embodiment adopts the method of Experimental Group 3 of Embodiment 3 to test samples with different creatinine concentrations as shown in Table 3. Each sample is tested five times, and the test results are shown in Table 3.

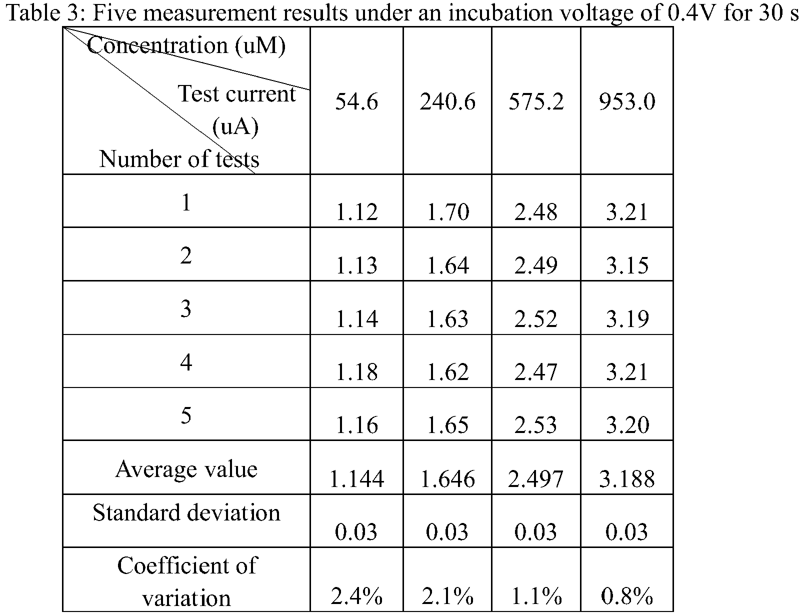

From the data in Table 3, it can be seen that using the method of the present invention, i.e., after sample injection and detection, a positive voltage of 0.4V is applied for incubation for 30 s, and a voltage of -0.4V is applied for signal measurement to obtain the current value at the time T2, the CV value at all four concentrations is less than 5%. Therefore, the measurement method of the present invention meets the measurement requirements and can be used for practical measurement.

### Embodiment 7 Accuracy Test

A creatinine analyzer is fabricated by using the method of the present invention to test samples with different concentrations, with five tests for each concentration. The test results are shown in Table 4:

**Table 4:**

| Batch number | 202106236 | | | |
|---|---|---|---|---|
| Plasma creatinine biochemical value (µmol/L) | 78 | 271 | 498 | 786 |
| Reading of the present invention (µmol/L) | | | | |
| Reading 1 | 55 | 253 | 538 | 794 |
| Reading 2 | 53 | 261 | 512 | 826 |
| Reading 3 | 52 | 263 | 538 | 869 |
| Reading 4 | 48 | 244 | 528 | 869 |
| Reading 5 | 47 | 253 | 536 | 875 |
| Average value | 51.0 | 254.8 | 530.4 | 846.6 |
| Standard deviation SD | 3.39 | 7.56 | 11.08 | 35.36 |
| Coefficient of variation CV | 6.6% | 3.0% | 2.1% | 4.2% |
| Relative deviation from the plasma creatinine biochemical value | -27.0 | -16.2 | --- | --- |
| Relative deviation percentage from the plasma creatinine biochemical value | --- | --- | 6.5% | 7.7% |

From the data in Table 4, it can be seen that the creatinine analyzer fabricated by using the method of the present invention exhibits high measurement precision and good accuracy.

## Claims

1. A measurement method for a biosensor, wherein an electrochemical biosensor is used for detection, the electrochemical biosensor comprises a working electrode and a counter electrode, and a measurement process comprises:
Step 1: Adding a sample into the biosensor;
Step 2: Performing signal incubation, and applying a voltage between the working electrode and the counter electrode of the biosensor for a duration of T1 s;
Step 3: After the time of T1 s elapses, applying a voltage between the working electrode and the counter electrode of the biosensor, wherein a voltage difference generated by the applied voltage is opposite to a voltage difference generated in Step 2, for a duration of T2 s; and
Step 4: On the basis of electrical data obtained in Step 3, calculating a content of an analyte in the sample.

2. The measurement method according to claim 1, wherein in Step 2, the voltage is applied between the working electrode and the counter electrode of the biosensor, such that the voltage difference between the working electrode and the counter electrode is a positive voltage or a negative voltage.

3. The measurement method according to claim 1, wherein in Step 4, on the basis of a measurement value at the time T2, the content of the analyte in the sample is calculated.

4. The measurement method according to claim 1, wherein the analyte is creatinine, and the measurement process comprises:
Step 1: Adding a sample into the biosensor;
Step 2: Applying a voltage to the working electrode and the counter electrode of the biosensor, such that a voltage difference between the working electrode and the counter electrode is a positive voltage for a duration of T1 s;
Step 3: After the time of T1 s elapses, applying a voltage between the working electrode and the counter electrode of the biosensor, such that the voltage difference between the working electrode and the counter electrode is a negative voltage for a duration of T2 s; and
Step 4: On the basis of electrical data obtained in Step 3, calculating a content of an analyte in the sample.

5. The measurement method according to claim 4, wherein in Step 2, the voltage is applied to the working electrode and the counter electrode of the biosensor, such that the voltage of the working electrode is 0.4V higher than the voltage of the counter electrode.

6. The measurement method according to claim 5, wherein the voltage applied to the working electrode is 0.4V and the voltage applied to the counter electrode is 0V.

7. The measurement method according to claim 4, wherein in Step 3, the voltage is applied to the working electrode and the counter electrode of the biosensor, such that the voltage of the working electrode is 0.4V lower than the voltage of the counter electrode.

8. The measurement method according to claim 7, wherein the voltage applied to the working electrode is 0.4V and the voltage applied to the counter electrode is 0.8V.

9. The measurement method according to claim 4, wherein in Step 4, on the basis of a measurement value at the time T2, the content of the analyte in the sample is calculated.

10. The measurement method according to claim 4, wherein a reagent on the biosensor comprises creatininase, creatinase, sarcosine oxidase, peroxidase, and a reduced electron mediator.

11. An analysis system for a biological sample, comprising a biosensor and an analyzer, wherein the analyzer comprises pins connected to electrode leads of the biosensor, the pins are connected to a current-to-voltage conversion circuit, the current-to-voltage conversion circuit is connected to an analog-to-digital conversion circuit, the analog-to-digital conversion circuit is connected to a microcontroller, wherein the analyzer further comprises a positive voltage generation circuit connected to a working electrode lead, and a voltage switching circuit connected to a counter electrode lead; during measurement, the analyzer applies a voltage to the working electrode and the counter electrode of the biosensor for a duration of T1 s; after the time of T1 s elapses, a voltage is applied between the working electrode and the counter electrode of the biosensor, and a voltage difference generated by the applied voltage is opposite to a voltage difference generated in step 2 for a duration of T2 s; and on the basis of electrical data during the T2 s, a content of the analyte in the biological sample is calculated.

12. The analysis system according to claim 11, wherein during the T1 s, the voltage is applied between the working electrode and the counter electrode of the biosensor, such that the voltage difference between the working electrode and the counter electrode is a positive voltage or a negative voltage.

13. The analysis system according to claim 11, wherein the analyte is creatinine.

14. The analysis system according to claim 11, wherein during the duration of T1 s, the voltage is applied to the working electrode and the counter electrode of the biosensor, such that the voltage of the working electrode is 0.4V higher than the voltage of the counter electrode.

15. The analysis system according to claim 14, wherein the voltage applied to the working electrode is 0.4V and the voltage applied to the counter electrode is 0V.

16. The analysis system according to claim 11, wherein during the duration of T2 s, the voltage is applied to the working electrode and the counter electrode of the biosensor, such that the voltage of the working electrode is 0.4V lower than the voltage of the counter electrode.

17. The analysis system according to claim 16, wherein the voltage applied to the working electrode is 0.4V and the voltage applied to the counter electrode is 0.8V.

18. The analysis system according to claim 11, wherein in the calculation step, on the basis of a measurement value during the T2, the content of the analyte in the sample is calculated.

19. The analysis system according to claim 11, wherein the time T1 is longer than or equal to 30 s and the T2 time is longer than or equal to 3 s.

20. The analysis system according to claim 11 , wherein a reagent on the biosensor comprises creatininase, creatinase, sarcosine oxidase, peroxidase, and a reduced electron mediator.
